# FASCICULE DE BREVET EUROPEEN

(11) **EP 3 867 804 B1**
(45) Date de publication et mention de la délivrance du brevet: **12.07.2023**
(21) Numéro de dépôt: 19801959.8
(22) Date de dépôt: 04.10.2019
(51) Int. Cl.: G06V 20/58

(54) **PROCÉDÉ DE DÉTERMINATION D'UNE VALEUR COURANTE D'UN PARAMÈTRE D'OCCUPATION RELATIF À UNE PORTION D'UN ESPACE SITUÉ À PROXIMITÉ D'UN VÉHICULE TERRESTRE À MOTEUR**
VERFAHREN ZUR BESTIMMUNG EINES AKTUELLEN WERTS EINES BELEGUNGSPARAMETERS, DER SICH AUF EINEN TEIL EINES RAUMES BEZIEHT, DER SICH IN DER NÄHE EINES MOTORBETRIEBENEN LANDFAHRZEUGS BEFINDET
METHOD FOR DETERMINING A CURRENT VALUE OF AN OCCUPANCY PARAMETER RELATING TO A PORTION OF A SPACE LOCATED IN THE VICINITY OF A MOTOR-DRIVEN LAND VEHICLE

(30) Priorité: 19.10.2018 FR 1871241
(43) Date de publication de la demande: 25.08.2021
(73) Titulaire: PSA Automobiles SA, 78300 Poissy (FR)
(72) Inventeur: VANPOPERINGHE, Elodie, 92100 BOULOGNE BILLANCOURT (FR); DUESO, Damien, 91640 FONTENAY LES BRIIS (FR); RIZZO, Audrey, 92150 SURESNES (FR); GALERON, Patrice, 94240 L HAY LES ROSES (FR); CHAMBRIN, Loic, 78960 VOISINS LE BRETONNEUX (FR)
(86) Numéro de dépôt international: PCT/FR2019/052359
(87) Numéro de publication internationale: WO 2020/079343

(56) Documents cités:
- WO-A1-2009/038558
- JP-A- H04 223 694
- MURAT CALISKAN ET AL: "Predicting Parking Lot Occupancy in Vehicular Ad Hoc Networks", I E E E V T S VEHICULAR TECHNOLOGY CONFERENCE. PROCEEDINGS, IEEE, US, 1 avril 2007 (2007-04-01), pages 277-281, XP031092635, ISBN: 978-1-4244-0266-3
- DODIER R H ET AL: "Building occupancy detection through sensor belief networks", ENERGY AND BUILDINGS, LAUSANNE, CH, vol. 38, no. 9, 1 septembre 2006 (2006-09-01), pages 1033-1043, XP027939084, ISSN: 0378-7788 [extrait le 2006-09-01]

## Description

La présente invention concerne le domaine des systèmes d'aide à la conduite pour véhicules terrestres à moteur. L'invention porte notamment sur un procédé de détermination d'au moins une valeur courante d'au moins un paramètre d'occupation relatif à une portion d'un espace situé à proximité d'un véhicule terrestre à moteur. L'invention s'applique notamment aux véhicules automobiles.

On connait par l'article de Murat Caliskan et al., intitulé « Predicting Parking Lot Occupancy in Vehicular Ad Hoc Networks », DOI : 10.1109/VETECS.2007.69, une méthode de recherche de places de parking non occupées.

On sait que les systèmes d'aide à la conduite actuels, notamment ceux destinés à l'assistance pour la conduite autonome, basent généralement les fonctionnalités d'aide à la conduite (e.g. freinage d'urgence, évitement latéral, suivi de la voie, etc.) sur une perception d'un environnement de conduite déterminée en utilisant les appareils de détection de natures diverses qui sont aujourd'hui agencés dans la plupart des véhicules (LIDAR, RADAR, caméra, capteurs à ultrasons, etc.). Aussi, dans la plupart des cas, la perception de l'environnement de conduite est établie par le système d'aide à la conduite sur la base de données qui sont générées par ces appareils de détection. Dans certains cas, cette perception de l'environnement de conduite se matérialise sous la forme d'une grille d'occupation établie pour couvrir un espace plus ou moins grand situé à proximité du véhicule. Dans de tels cas, l'évolution de l'occupation de l'espace par des obstacles ou des objets est alors définie en utilisant, par exemple, une variable d'état qui caractérise un état d'occupation et qui est définie pour chaque cellule de la grille, i.e. pour toutes les portions de l'espace considéré qui est situé à proximité du véhicule. Ainsi, la variable d'état peut évoluer selon l'état d'occupation d'une cellule de la grille d'occupation pour caractériser au moins un état libre, état dans lequel aucun objet/obstacle ne se trouve au sein de la cellule, un état occupé, état opposé au précédent dans lequel au moins un objet/obstacle se trouve dans la cellule, et, éventuellement, un état indéfini qui caractérise une appréciation indéfinie, i.e. inconnue, quant à l'occupation d'une cellule considérée.

On comprend donc que la précision et la fiabilité des systèmes d'aide à la conduite actuels qui basent la fourniture de fonctionnalités d'aide à la conduite principalement sur une perception de l'environnement de conduite établie par grille d'occupation sont tributaires de la précision avec laquelle les grilles d'occupation peuvent être établies. En effet, on ne peut espérer baser des fonctionnalités d'aide à la conduite fiables et sûres si l'on n'est pas en mesure de déterminer précisément l'environnement de conduite. De plus, il est clair qu'une situation particulièrement critique existe lorsqu'un choix est fait pour affecter un état occupé ou libre à une cellule de la grille. Or, très souvent, les systèmes d'aide à la conduite actuels ne proposent pas de mécanismes de sécurisation additionnels qui permettent de mieux suivre ces changements d'états qui peuvent avoir des conséquences directes sur la sécurité de fonctionnalités d'aide à la conduite. En ce sens, de tels systèmes ne sont donc pas en mesure de fournir des fonctionnalités d'aide à la conduite aussi sûres que cela est possible.

L'invention vise à fournir un procédé pour palier à ces inconvénients. Plus particulièrement, l'invention a pour but de fournir un procédé et un système qui contribuent à améliorer la précision de la perception d'un environnement de conduite en vue de fournir une meilleure détection des obstacles et supporter ainsi la fourniture de fonctionnalités d'aide à la conduite plus sûres.

A cet effet, l'invention a pour objet un procédé de détermination d'au moins une valeur courante d'au moins un paramètre d'occupation relatif à une portion d'un espace situé à proximité d'un véhicule terrestre à moteur, le procédé comprenant les étapes de :
- obtenir une valeur antérieure du paramètre d'occupation, une valeur courante d'un compteur d'occupation et une valeur courante d'un compteur de temporisation, et
- déterminer la valeur courante du paramètre d'occupation en utilisant la valeur antérieure du paramètre d'occupation, la valeur courante du compteur d'occupation et la valeur courante du compteur de temporisation.

Le procédé comprend également une étape consistant à déterminer si la valeur antérieure du paramètre d'occupation caractérise une appréciation indéfinie quant à l'occupation de ladite portion et, lorsque tel est le cas, une étape consistant à utiliser des données générées sur la base d'un signal émis par un appareil de détection agencé dans le véhicule pour déterminer la valeur courante du paramètre d'occupation, une étape consistant à incrémenter le compteur d'occupation et une étape consistant à réinitialiser le compteur de temporisation.

Le procédé comprend également une étape consistant à, lorsque la valeur antérieure du paramètre d'occupation caractérise une appréciation définie quant à l'occupation de ladite portion, déterminer si un signal établissant qu'un objet est présent au sein de ladite portion est émis par l'appareil de détection, et, lorsque tel et le cas, une étape consistant à utiliser un modèle prédictif pour déterminer la valeur courante du paramètre d'occupation, une étape consistant à incrémenter le compteur d'occupation et une étape consistant à réinitialiser le compteur de temporisation.

Le procédé comprend également une étape consistant à, lorsque l'appareil de détection émet un signal établissant qu'aucun objet n'est présent au sein de ladite portion, déterminer si ladite portion se trouve localisée dans le champ de détection de l'appareil de détection.

Le procédé comprend également une étape consistant à, lorsque ladite portion est localisée dans le champ de détection de l'appareil de détection, déterminer si la compteur d'occupation est supérieur à un premier seuil prédéfini et, lorsque tel est le cas, une étape consistant à déterminer si le compteur de temporisation est inférieur ou égale à un deuxième seuil prédéfini et, lorsque tel est le cas, une étape consistant à affecter la valeur antérieure du paramètre d'occupation à la valeur courante du paramètre d'occupation et une étape consistant à incrémenter le compteur de temporisation.

Selon une autre variante, le procédé peut comprendre une étape consistant à, lorsque le compteur d'occupation est inférieur au premier seuil, utiliser le modèle prédictif pour déterminer la valeur courante du paramètre d'occupation, une étape consistant à réinitialiser le compteur d'occupation et une étape consistant à réinitialiser le compteur de temporisation.

Selon une autre variante, le procédé peut comprendre une étape consistant à, lorsque la valeur du compteur de temporisation est supérieure au deuxième seuil, utiliser le modèle prédictif pour déterminer la valeur courante du paramètre d'occupation, une étape consistant à réinitialiser le compteur de d'occupation et une étape consistant à réinitialiser le compteur temporisation

L'invention a en outre pour objet un système informatique de détermination d'au moins une valeur courante d'au moins un paramètre d'occupation relatif à une portion d'un espace situé à proximité d'un véhicule terrestre à moteur, le système comprenant des moyens mettant en oeuvre un procédé tel que défini ci-dessus.

Selon une variante, le système peut comprendre au moins un calculateur et des moyens de stockage dans lesquels sont stockés au moins un programme pour l'exécution d'étapes selon le procédé de détermination mis en oeuvre par le système.

L'invention a en outre pour objet un véhicule terrestre à moteur comprenant un système tel que défini ci-dessus.

D'autres caractéristiques et avantages de l'invention apparaîtront à l'examen de la description détaillée ci-après, et des dessins annexés, sur lesquels :
[ Fig. 1] est un schéma bloc d'un système de détermination selon l'invention, et
[ Fig. 2] est un organigramme illustrant certaines étapes d'un procédé de détermination selon l'invention.

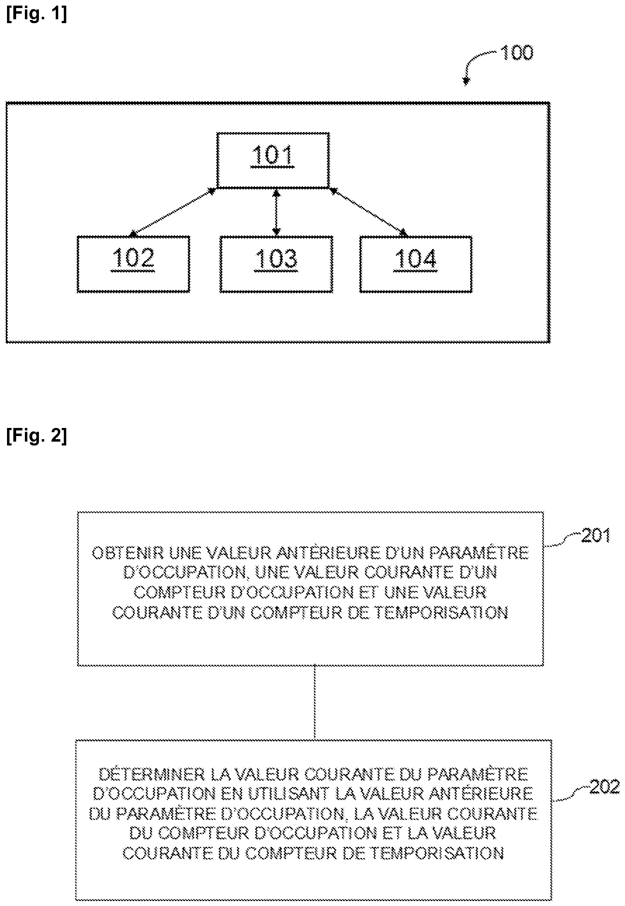

Comme illustré à la figure 1, le système de détermination 100 d'au moins une valeur courante d'au moins un paramètre d'occupation relatif à une portion d'un espace situé à proximité d'un véhicule terrestre à moteur selon la présente invention comprend une unité de traitement d'information 101, comprenant un ou plusieurs processeurs, un support de stockage de données 102, des moyens d'entrée et sortie 103 et, et un oracle 104. De préférence, l'oracle 104 comprend un module destiné à établir un modèle prédictif de sorte que l'oracle 104 est apte à utiliser le modèle prédictif pour générer une valeur d'un paramètre d'occupation en regard d'une portion d'un espace en fonction de données qu'il reçoit. De préférence, le module de l'oracle 104 est basé sur la mise en oeuvre de la théorie de Dempster-Shafer.

Selon certains modes de réalisation, le système 100 est embarqué dans un véhicule terrestre à moteur, par exemple un véhicule automobile, et est distribué parmi un ou plusieurs calculateurs. Selon d'autres modes de réalisation de l'invention, le système 100 comprend un ou plusieurs ordinateurs, un ou plusieurs serveurs, un ou plusieurs supercalculateurs et/ou n'importe quelle combinaison comprenant l'un de ces systèmes informatiques. On peut également envisager certains modes de réalisation dans lesquels certains éléments du système 100 sont hébergés en partie à bord d'un véhicule terrestre à moteur, sur un ou plusieurs calculateurs, alors que d'autres éléments sont répartis sur un ou plusieurs serveurs distants.

Selon le mode de réalisation préféré, le système 100 fait partie intégrante d'un calculateur d'un système d'aide à la conduite (non représenté) du véhicule qui s'appuie sur une pluralité d'appareils de détection (non représentés) agencés dans le véhicule. De préférence, le système d'aide à la conduite comprend au moins un appareil de télédétection par laser, un appareil de radiodétection, une caméra et/ou un capteur à ultrasons, chacun comprenant de préférence un module de traitement des signaux apte à générer des données sur la base de signaux reçus. Alternativement, ou cumulativement, le système d'aide à la conduite comprend un module de traitement central apte à générer des données sur la base de signaux transmis par les appareils de détection. De manière conventionnelle, le système d'aide à la conduite comprend aussi un ou plusieurs calculateurs qui, selon des rôles établis et en fonction des données générées par les appareils de détection, contrôlent le fonctionnement de certains organes du véhicule pour fournir diverses fonctionnalités d'aide à la conduite (e.g. assistance au freinage d'urgence, évitement d'obstacle, suivi de voie). Alternativement, ou cumulativement, le système d'aide à la conduite comprend en outre des éléments additionnels adaptés et configurés pour interagir au sein d'un système de transport intelligent.

Alternativement, selon un autre mode de réalisation particulier, le système 100 est hébergé par un calculateur indépendant et interagit avec un calculateur du système d'aide à la conduite du véhicule pour obtenir les données générées par les appareils de détection. Alternativement, les données sont générées par le système d'aide à la conduite et stockées par celui-ci dans le support de stockage 102 du système 100.

Tous les éléments décrits ci-dessus contribuent pour permettre au système 100 de mettre en oeuvre un procédé de détermination d'au moins une valeur courante d'au moins un paramètre d'occupation relatif à une portion d'un espace situé à proximité d'un véhicule terrestre à moteur, tel que décrit ci-dessous.

Comme illustré à la figure 2, selon une étape 201,le système 100 obtient une valeur antérieure du paramètre d'occupation, une valeur courante d'un compteur d'occupation et une valeur courante d'un compteur de temporisation. Ensuite, selon une autre étape 202, le système 100 détermine la valeur courante du paramètre d'occupation en utilisant la valeur antérieure du paramètre d'occupation, la valeur courante du compteur d'occupation et la valeur courante du compteur de temporisation. Pour ce faire, le système 100 détermine d'abord si la valeur antérieure du paramètre d'occupation caractérise une appréciation indéfinie quant à l'occupation de ladite portion. Comme évoqué ci-dessus, une appréciation indéfinie correspond au cas où l'on ne sait pas déterminer si une portion d'espace considérée est libre ou occupée. Lorsque tel est le cas, le système 100 obtient des données générées sur la base d'au moins un signal émis par au moins un appareil de détection agencé dans le véhicule. Sur cette base unique, le système détermine la valeur courante du paramètre d'occupation de la portion d'espace. Ensuite, le système 100 incrémente le compteur d'occupation et réinitialise le compteur de temporisation. En d'autres termes, une portion d'espace dont l'état d'occupation était antérieurement indéfini se voit affectée un état d'occupation courant uniquement sur la base des signaux et des données générées par un ou plusieurs appareils de détection. Le compteur d'occupation est logiquement incrémenté car on préfère à ce stade considérer, lorsque l'on ne sait pas si la portion d'espace était antérieurement libre ou occupée, que celle-ci était occupée. En effet, on conviendra que, lorsque la perception d'un environnement de conduite sert de base unique à la fourniture de fonctionnalités d'aide à la conduite, il vaut toujours mieux considérer qu'un obstacle est présent et de se tromper que l'inverse.

Ensuite, au cours d'une autre étape, lorsque la valeur antérieure du paramètre d'occupation caractérise une appréciation définie quant à l'occupation de ladite portion, i.e. on sait déterminer si la portion d'espace est libre ou occupée, le système 100 détermine si un signal établissant qu'un objet est présent au sein de ladite portion est émis par un appareil de détection. Lorsque tel et le cas, le système interroge l'oracle 104 pour déterminer la valeur courante du paramètre d'occupation en utilisant le modèle prédictif. Ensuite, le système 100 incrémente le compteur d'occupation et réinitialise le compteur de temporisation.

En revanche, lorsque l'appareil de détection émet un signal établissant qu'aucun objet n'est présent au sein de ladite portion, le système 100 poursuit en déterminant si ladite portion se trouve localisée dans le champ de détection de l'appareil de détection.

Ensuite, lorsque ladite portion est localisée dans le champ de détection de l'appareil de détection, le système 100 détermine si le compteur d'occupation est supérieur à un premier seuil prédéfini. Lorsque tel est le cas, le système 100 détermine si le compteur de temporisation est inférieur ou égale à un deuxième seuil prédéfini et, lorsque tel est le cas, le système 100 affecte la valeur antérieure du paramètre d'occupation à la valeur courante du paramètre d'occupation et incrémente le compteur de temporisation. Par ces étapes, le système crée un mécanisme de sécurisation qui met en oeuvre une temporisation pour retarder un changement d'état d'occupation d'une portion d'espace souvent occupée qui, comme déjà mentionné, peut avoir des conséquences directes sur la sécurité de fonctionnalités d'aide à la conduite. Au contraire, lorsque la valeur du compteur de temporisation est supérieure au deuxième seuil, le système 100 utilise le modèle prédictif pour déterminer la valeur courante du paramètre d'occupation, réinitialise le compteur de d'occupation et réinitialise le compteur temporisation. Par ces étapes, le système 100 s'assure que l'exécution du mécanisme de sécurisation pour des portions d'espace souvent occupées est limitée à une durée prédéfinie qui dépend de la valeur du deuxième seuil.

Sinon, lorsque l'appareil de détection émet un signal établissant qu'aucun objet n'est présent au sein de ladite portion, que ladite portion se trouve localisée dans le champ de détection de l'appareil de détection et que le compteur d'occupation est inférieur au premier seuil, le système 100 utilise le modèle prédictif pour déterminer la valeur courante du paramètre d'occupation, réinitialise le compteur d'occupation et réinitialise le compteur de temporisation. Par ces étapes, le système 100 adapte le mécanisme de sécurisation de telle sorte que des changements d'état relatifs à des portions d'espace qui ne sont pas souvent occupées sont sujets à des dispositions de sécurisation moins importantes.

Par conséquent, aux termes du procédé et du système selon l'invention décrits ci-dessus, les briques fonctionnelles sont fournies pour permettre à un système d'aide à la conduite d'établir une perception plus précise d'un environnement de conduite et, donc, de fournir ainsi des fonctionnalités d'aide à la conduite plus fiables et plus sûres.

## Revendications

1. Procédé de détermination par un système informatique (100) d'au moins une valeur courante d'au moins un paramètre d'occupation relatif à une portion d'un espace situé à proximité d'un véhicule terrestre à moteur, le procédé comprenant les étapes de :
- obtenir une valeur antérieure du paramètre d'occupation, une valeur courante d'un compteur d'occupation et une valeur courante d'un compteur de temporisation, et
- déterminer la valeur courante du paramètre d'occupation en utilisant la valeur antérieure du paramètre d'occupation, la valeur courante du compteur d'occupation et la valeur courante du compteur de temporisation ; et
ledit procédé comporte en outre :
- une étape consistant à déterminer si la valeur antérieure du paramètre d'occupation caractérise une appréciation indéfinie quant à l'occupation de ladite portion et, lorsque tel est le cas, une étape consistant à utiliser des données générées sur la base d'un signal émis par un appareil de détection agencé dans le véhicule pour déterminer la valeur courante du paramètre d'occupation, une étape consistant à incrémenter le compteur d'occupation et une étape consistant à réinitialiser le compteur de temporisation ;
- une étape consistant à, lorsque la valeur antérieure du paramètre d'occupation caractérise une appréciation définie quant à l'occupation de ladite portion, déterminer si un signal établissant qu'un objet est présent au sein de ladite portion est émis par l'appareil de détection, et, lorsque tel et le cas, une étape consistant à utiliser un modèle prédictif pour déterminer la valeur courante du paramètre d'occupation, une étape consistant à incrémenter le compteur d'occupation et une étape consistant à réinitialiser le compteur de temporisation ;
- une étape consistant à, lorsque l'appareil de détection émet un signal établissant qu'aucun objet n'est présent au sein de ladite portion, déterminer si ladite portion se trouve localisée dans le champ de détection de l'appareil de détection ; **caractérisé en ce que** le procédé comprends
- une étape consistant à, lorsque ladite portion est localisée dans le champ de détection de l'appareil de détection, déterminer si la compteur d'occupation est supérieur à un premier seuil prédéfini et, lorsque tel est le cas, une étape consistant à déterminer si le compteur de temporisation est inférieur ou égale à un deuxième seuil prédéfini et, lorsque tel est le cas, une étape consistant à affecter la valeur antérieure du paramètre d'occupation à la valeur courante du paramètre d'occupation et une étape consistant à incrémenter le compteur de temporisation.

2. Procédé selon la revendication 1, comprenant en outre une étape consistant à, lorsque le compteur d'occupation est inférieur au premier seuil, utiliser le modèle prédictif pour déterminer la valeur courante du paramètre d'occupation, une étape consistant à réinitialiser le compteur d'occupation et une étape consistant à réinitialiser le compteur de temporisation.

3. Procédé selon la revendication 1 comprenant en outre une étape consistant à, lorsque la valeur du compteur de temporisation est supérieure au deuxième seuil, utiliser le modèle prédictif pour déterminer la valeur courante du paramètre d'occupation, une étape consistant à réinitialiser le compteur de d'occupation et une étape consistant à réinitialiser le compteur temporisation.

4. Système informatique (100) de détermination d'au moins une valeur courante d'au moins un paramètre d'occupation relatif à une portion d'un espace situé à proximité d'un véhicule terrestre à moteur, **caractérisé en ce qu'**il comprend des moyens (101, 102, 103, 104) de mise en oeuvre d'un procédé selon l'une quelconque des revendications précédentes.

5. Système selon la revendication 4, comprenant en outre au moins un calculateur (101) et des moyens de stockage (102) dans lesquels sont stockés au moins un programme pour l'exécution d'étapes selon le procédé de détermination mis en oeuvre par le système.

6. Véhicule terrestre à moteur, comprenant un système selon l'une des revendications 4 ou 5.

## Patentansprüche

1. Verfahren zur Bestimmung durch ein Computersystem (100) von mindestens einem aktuellen Wert von mindestens einem Belegungsparameter, der sich auf einen Teil eines Raums in der Nähe eines motorisierten Landfahrzeugs bezieht, wobei das Verfahren die folgenden Schritte umfasst: :
- Erhalten eines früheren Werts des Belegungsparameters, eines aktuellen Werts eines Belegungszählers und eines aktuellen Werts eines Timerzählers, und
- Bestimmen des aktuellen Werts des Belegungsparameters unter Verwendung des früheren Werts des Belegungsparameters, des aktuellen Werts des Belegungszählers und des aktuellen Werts des Zeitzählers; und
das Verfahren außerdem Folgendes umfasst:
- einen Schritt des Bestimmens, ob der vorherige Wert des Belegungsparameters eine undefinierte Beurteilung der Belegung des Abschnitts kennzeichnet, und, wenn dies der Fall ist, einen Schritt des Verwendens von Daten, die auf der Grundlage eines Signals erzeugt werden, das von einer in dem Fahrzeug angeordneten Erfassungsvorrichtung ausgegeben wird, um den aktuellen Wert des Belegungsparameters zu bestimmen, einen Schritt des Inkrementierens des Belegungszählers und einen Schritt des Zurücksetzens des Zeitzählers ;
- einen Schritt, bei dem, wenn der vorherige Wert des Belegungsparameters eine definierte Beurteilung der Belegung des Abschnitts charakterisiert, bestimmt wird, ob ein Signal, das feststellt, dass sich ein Objekt innerhalb des Abschnitts befindet, von der Erfassungsvorrichtung ausgegeben wird, und, wenn dies der Fall ist, einen Schritt, bei dem ein Vorhersagemodell verwendet wird, um den aktuellen Wert des Belegungsparameters zu bestimmen, einen Schritt, bei dem der Belegungszähler inkrementiert wird, und einen Schritt, bei dem der Zeitgeberzähler zurückgesetzt wird; und einen Schritt, bei dem der Zeitgeberzähler zurückgesetzt wird;
- einen Schritt, bei dem, wenn die Erfassungsvorrichtung ein Signal ausgibt, das feststellt, dass sich kein Objekt in dem Abschnitt befindet, bestimmt wird, ob sich der Abschnitt innerhalb des Erfassungsfeldes der Erfassungsvorrichtung befindet; **dadurch gekennzeichnet, dass** das Verfahren die folgenden Schritte umfasst
das Verfahren Folgendes umfasst
- einen Schritt, bei dem, wenn der Abschnitt im Erfassungsfeld der Erfassungsvorrichtung lokalisiert ist, bestimmt wird, ob der Belegungszähler größer als ein erster vordefinierter Schwellenwert ist, und, wenn dies der Fall ist, einen Schritt, bei dem bestimmt wird, ob der Zeitzähler kleiner oder gleich einem zweiten vordefinierten Schwellenwert ist, und, wenn dies der Fall ist, einen Schritt, bei dem der vorherige Wert des Belegungsparameters dem aktuellen Wert des Belegungsparameters zugewiesen wird, und einen Schritt, bei dem der Zeitzähler inkrementiert wird.

2. Verfahren nach Anspruch 1, ferner umfassend einen Schritt, bei dem, wenn der Belegungszähler unter dem ersten Schwellenwert liegt, das prädiktive Modell verwendet wird, um den aktuellen Wert des Belegungsparameters zu bestimmen, einen Schritt, bei dem der Belegungszähler zurückgesetzt wird, und einen Schritt, bei dem der Zeitzähler zurückgesetzt wird.

3. Verfahren nach Anspruch 1, ferner umfassend einen Schritt, bei dem, wenn der Wert des Zeitzählers über dem zweiten Schwellenwert liegt, das prädiktive Modell verwendet wird, um den aktuellen Wert des Belegungsparameters zu bestimmen, einen Schritt, bei dem der Belegungszähler zurückgesetzt wird, und einen Schritt, bei dem der Zeitzähler zurückgesetzt wird.

4. Computersystem (100) zur Bestimmung mindestens eines aktuellen Werts mindestens eines Belegungsparameters, der sich auf einen Teil eines Raums in der Nähe eines motorisierten Landfahrzeugs bezieht, **dadurch gekennzeichnet, dass** es Mittel (101, 102, 103, 104) zur Durchführung eines Verfahrens nach einem der vorhergehenden Ansprüche umfasst.

5. System nach Anspruch 4, ferner umfassend mindestens einen Rechner (101) und Speichermittel (102), in denen mindestens ein Programm zur Ausführung von Schritten gemäß dem vom System implementierten Bestimmungsverfahren gespeichert ist.

6. Motorisiertes Landfahrzeug, das ein System nach einem der Ansprüche 4 oder 5 umfasst.

## Claims

1. A method of determining by a computer system (100) at least one current value of at least one occupancy parameter relating to a portion of a space located in the vicinity of a motorized land vehicle, the method comprising the steps of:
- obtaining a previous value of the occupancy parameter, a current value of an occupancy counter and a current value of a time-out counter, and
- determining the current occupancy parameter value using the previous occupancy parameter value, the current occupancy counter value and the current timer counter value; and
said method further comprises :
- a step of determining whether the previous value of the occupancy parameter characterizes an indefinite judgement as to the occupancy of said portion and, when this is the case, a step of using data generated on the basis of a signal emitted by a sensing device arranged in the vehicle to determine the current value of the occupancy parameter, a step of incrementing the occupancy counter and a step of resetting the timer counter;
- a step consisting in, when the previous value of the occupancy parameter characterizes a defined assessment of the occupancy of said portion, determining whether a signal establishing that an object is present within said portion is emitted by the detection device, and, when this is the case, a step consisting in using a predictive model to determine the current value of the occupancy parameter, a step consisting in incrementing the occupancy counter and a step consisting in resetting the timer counter;
- a step of, when the detection device emits a signal establishing that no object is present within said portion, determining whether said portion is located within the detection field of the detection device; **characterized in that** the
method comprises
- a step of, when said portion is located within the detection field of the detection device, determining whether the occupancy counter is greater than a first predefined threshold and, when this is the case, a step of determining whether the timer counter is less than or equal to a second predefined threshold and, when this is the case, a step of assigning the previous value of the occupancy parameter to the current value of the occupancy parameter and a step of incrementing the timer counter.

2. A method according to claim 1, further comprising a step of, when the occupancy counter is below the first threshold, using the predictive model to determine the current value of the occupancy parameter, a step of resetting the occupancy counter and a step of resetting the timer counter.

3. A method according to claim 1 further comprising a step of, when the value of the timer counter is greater than the second threshold, using the predictive model to determine the current value of the occupancy parameter, a step of resetting the occupancy counter and a step of resetting the timer counter.

4. Computer system (100) for determining at least one current value of at least one occupancy parameter relating to a portion of a space located in the vicinity of a motorized land vehicle, **characterized in that** it comprises means (101, 102, 103, 104) for implementing a method according to any one of the preceding claims.

5. System according to claim 4, further comprising at least one computer (101) and storage means (102) in which are stored at least one program for executing steps according to the determination method implemented by the system.

6. Land motor vehicle, comprising a system according to one of claims 4 or 5.
